# DEMANDE DE BREVET EUROPEEN

(11) **EP 1 137 297 A1**
(43) Date de publication de la demande: **26.09.2001**
(21) Numéro de dépôt: 01400605.0
(22) Date de dépôt: 08.03.2001
(51) Int. Cl.: H04Q 7/30

(54) **Procédé pour améliorer la qualité de parole dans un système de radiocommunications mobiles**

(30) Priorité: 20.03.2000 FR 0003520
(71) Demandeur: ALCATEL, 75008 Paris (FR)
(72) Inventeur: Mauger, Raphaelle, 78000 Versailles (FR)
(74) Mandataire: El Manouni, Josiane

(57) **Abrégé**

Procédé pour optimiser la qualité de parole dans un système de radiocommunications mobiles en utilisant si possible un mode de fonctionnement sans double transcodage pour un appel de mobile à mobile, ce procédé étant essentiellement caractérisé en ce que, ledit mode de fonctionnement sans double transcodage n'étant pas possible dans le cas de mode de codage dit non autorisé pour ce mode de fonctionnement, au lieu d'utiliser dans ce cas un mode de fonctionnement avec double transcodage, on utilise si possible le mode de fonctionnement sans double transcodage et avec un mode de codage autorisé, à condition que ce mode de codage autorisé soit supporté.

## Description

La présente invention concerne d'une manière générale les systèmes de radiocommunications mobiles.

La présente invention concerne plus particulièrement les services de parole, et les techniques mises en oeuvre dans ces systèmes pour optimiser la qualité de service.

D'une manière générale, différents modes de codage (ou codage source), peuvent être utilisés pour la transmission de la parole sur l'interface radio, correspondant à différents compromis entre qualité de la parole et quantité de ressources radio nécessaires à sa transmission. Ainsi, dans le système GSM ("Global System for Mobile communications") les différents modes de codage suivants, entre autres, peuvent être utilisés:
- un mode plein débit (ou FR, pour "Full Rate" en anglais), correspondant à un débit de 13 kbit/s,
- un mode plein débit amélioré (ou EFR, pour "Enhanced Full Rate" en anglais) correspondant à un débit de 12,2 kbit/s,
- un mode demi-débit (ou HR, pour "Half Rate" en anglais), correspondant à un débit de 5,6 kbit/s.

D'une manière générale, pour un mobile donné, le choix d'un mode de codage peut être effectué, de manière fixe ou adaptative, parmi l'ensemble des modes de codage supportés (c'est-à-dire supportés par ce mobile et par les entités du système en charge de l'appel pour ce mobile, comme il sera entendu dans tout ce qui suit).

Le choix d'un mode de codage de manière fixe a pour inconvénient de ne pas permettre de réaliser à chaque instant un meilleur compromis entre qualité de la parole et quantité de ressources radio nécessaires, en fonction des conditions rencontrées.

Le choix d'un mode de codage de manière adaptative permet d'éviter un tel inconvénient. Notamment, selon le mode de codage appelé AMR (pour "Adaptive Multi-Rate coding"), on sélectionne à chaque instant, en fonction des conditions de transmission rencontrées, une combinaison optimale d'un codage source donné et d'un codage canal donné (le codage canal permettant, de manière connue, d'obtenir une protection contre les erreurs de transmission, par introduction d'une certaine redondance dans les informations transmises).

Des équipements appelés transcodeurs sont en outre prévus pour passer du mode de codage ainsi sélectionné pour la transmission sur l'interface radio, à un mode de codage standard tel que le mode PCM (pour "Pulse Code Modulation" en anglais), utilisé de manière générale dans les réseaux filaires et correspondant à un débit de 64kbit/s. Dans le système GSM, un tel transcodeur est aussi appelé "TRAU", pour "Transcoder Rate Adaptor Unit" en anglais.

Si un tel transcodage est bien nécessaire pour le cas d'un appel entre un terminal mobile et un terminal fixe, il n'est en revanche pas nécessaire pour le cas d'un appel entre deux terminaux mobiles. Dans ce dernier cas, pour éviter de dégrader inutilement la parole en lui faisant subir deux transcodages successifs, on utilise, si possible, un mode de fonctionnement dit ici sans double transcodage, appelé aussi TFO, pour "Tandem Free Operation" en anglais. Un tel mode de fonctionnement est notamment spécifié dans les Recommendations GSM 02.53, GSM 03.53, GSM 08.62.

D'une manière générale, l'établissement du mode TFO requiert une négociation entre entités homologues du système en charge de l'appel pour chacun des mobiles concernés. Le mode de codage étant généralement sélectionné de façon indépendante pour chacun de ces mobiles, un des buts de cette négociation est de sélectionner un mode de codage commun pour le mode TFO, et donc éventuellement d'effectuer un changement de mode de codage, pour au moins un de ces mobiles, pour le cas où le mode de codage sélectionné initialement pour ce mobile serait différent de ce mode de codage commun sélectionné pour le mode TFO.

Actuellement, le mode TFO n'est pas possible avec le mode AMR, notamment en raison du caractère adaptatif du mode AMR, indépendamment pour chaque mobile, qui rendrait le mode TFO relativement complexe à mettre en oeuvre. Ainsi, actuellement, dès lors que le mode de codage sélectionné pour un mobile est le mode AMR, il n'est pas prévu qu'une négociation en vue d'établir le mode TFO soit initiée entre l'entité du système en charge de l'appel pour ce mobile et son entité homologue.

La présente invention a notamment pour but, dans ce contexte, d'optimiser la qualité de la parole, en essayant de bénéficier, chaque fois que cela est possible, des avantages du mode TFO.

La présente invention a ainsi pour objet un procédé pour optimiser la qualité de parole dans un système de radiocommunications mobiles en utilisant si possible un mode de fonctionnement sans double transcodage pour un appel de mobile à mobile, ce procédé étant essentiellement caractérisé en ce que, ledit -mode de fonctionnement sans double transcodage n'étant pas possible dans le cas de mode de codage dit non autorisé pour ce mode de fonctionnement, au lieu d'utiliser dans ce cas un mode de fonctionnement avec double transcodage, on utilise si possible le mode de fonctionnement sans double transcodage et avec un mode de codage autorisé, à condition que ce mode de codage autorisé soit supporté.

Suivant une autre caractéristique, le mode de fonctionnement sans double transcodage étant établi à l'issue d'une négociation visant à sélectionner un mode de codage commun pour ce mode de fonctionnement, et une telle négociation étant initiée sur la base de modes de codage sélectionnés initialement indépendamment pour chacun desdits mobiles, si le mode de codage sélectionné initialement pour au moins un desdits mobiles est un mode de codage non autorisé, une négociation est initiée en remplaçant pour ce mobile ce mode de codage non autorisé par un mode de codage autorisé, à condition que ce mode de codage autorisé soit supporté.

Suivant une autre caractéristique, si les modes de codage sur la base desquels ladite négociation est initiée se correspondent, ils constituent ledit mode de codage commun pour le mode de fonctionnement sans double transcodage.

Suivant une autre caractéristique, si les modes de codage sur la base desquels ladite négociation est initiée ne se correspondent pas, un mode de codage commun pour le mode de fonctionnement sans double transcodage est, si possible, sélectionné sur la base de listes de modes de codage supportés, pour chacun desdits mobiles, au moins une desdites listes ne comportant pas de mode de codage non autorisé.

Suivant une autre caractéristique, ledit système est un système de type GSM.

Suivant une autre caractéristique, un mode de codage non autorisé est un mode de codage adaptatif.

Suivant une autre caractéristique, un mode de codage adaptatif est le mode AMR.

Suivant une autre caractéristique, un mode de codage autorisé est le mode plein débit.

Suivant une autre caractéristique, un mode de codage autorisé est le mode plein débit amélioré.

Suivant une autre caractéristique, un mode de codage autorisé est le mode demi-débit.

La présente invention a également pour objet un système de radiocommunications mobiles, dans lequel un mode de fonctionnement sans double transcodage est utilisé si possible pour un appel de mobile à mobile, ce système étant essentiellement caractérisé en ce que, ledit mode de fonctionnement sans double transcodage n'étant pas possible dans le cas de mode de codage dit non autorisé pour ce mode de fonctionnement, il comporte des moyens pour, au lieu d'utiliser dans ce cas un mode de fonctionnement avec double transcodage, utiliser si possible le mode de fonctionnement sans double transcodage et avec un mode de codage autorisé, à condition que ce mode de codage autorisé soit supporté.

D'autres objets et caractéristiques de la présente invention apparaîtront à la lecture de la description suivante, faite en relation avec les dessins ci-annexés dans lesquels:
- la figure 1 est destinée à rappeler, sur un exemple, un procédé suivant l'art antérieur,
- la figure 2 est destinée à illustrer un procédé suivant l'invention, suivant un exemple d'application,
- la figure 3 est destinée à illustrer un procédé suivant l'invention, suivant un autre exemple d'application,
- la figure 4 est destinée à illustrer un procédé suivant l'invention, suivant encore un autre exemple d'application.

Comme rappelé précédemment, le mode TFO permet, dans le cas d'un appel de mobile à mobile, d'éviter de dégrader inutilement la qualité de la parole en lui faisant subir inutilement deux transcodages successifs. Par conséquent, dès lors qu'un nouveau mode de codage est sélectionné pour au moins un de ces mobiles, il est intéressant d'utiliser, si possible, le mode TFO.

D'une manière générale, un nouveau mode de codage peut être sélectionné pour un mobile soit au moment de l'établissement d'un appel, c'est-à-dire lors de l'allocation initiale de ressources radio à ce mobile, soit lors de tout changement intervenant ultérieurement dans cette allocation de ressources radio, tel que suivant les procédures dites de transfert (ou "handover" en anglais), que ce transfert soit intra-cellulaire ou inter-cellulaire.

Le mode TFO est généralement établi à l'issue d'une négociation entre entités homologues du système en charge de l'appel pour chacun desdits mobiles, visant à sélectionner un mode de codage commun pour le mode TFO.

D'une manière générale, lesdites entités homologues peuvent notamment inclure l'une et/ou l'autre des entités:
- BSS pour ce qui concerne les fonctions liées à la transmission sur l'interface radio (BSS étant ici utilisé pour "Base Station Sub-system" en anglais, et incluant les entités communément appelées BTS, pour "Base Transceiver Station" en anglais, et BSC, pour "Base Station Controller" en anglais),
- TRAU pour ce qui concerne la fonction transcodage.

Une telle négociation peut notamment comporter les étapes suivantes:
- une première étape de signalisation au cours de laquelle lesdites entités homologues se communiquent les modes de codage initialement sélectionnés indépendamment pour chacun de ces mobiles,
- une étape au cours de laquelle on détecte si ces modes de codage initialement sélectionnés se correspondent. Si oui, ils constituent le mode de codage commun pour le mode TFO, et le mode TFO s'établit alors avec ce mode de codage. Sinon (ce qui est aussi appelé en anglais "codec mismatch"), sont ensuite mises en oeuvre:
- une deuxième étape de signalisation au cours de laquelle lesdites entités homologues se communiquent une liste de modes de codage supportés, pour chacun de ces mobiles,
- une étape (appelée aussi en anglais "codec mismatch resolution") au cours de laquelle on détecte si un mode de codage est supporté de manière commune dans lesdites listes de modes de codage supportés (en commençant généralement par les modes de codage permettant d'obtenir une meilleure qualité de parole). Si oui, ce mode de codage constitue le mode de codage commun pour le mode TFO, et le mode TFO s'établit alors avec ce mode de codage. Sinon, le mode TFO ne peut être établi et le mode de fonctionnement reste un mode de fonctionnement avec double transcodage;
- si le mode TFO peut être établi, une étape au cours de laquelle un changement de mode de codage est effectué, pour au moins un de ces mobiles, pour le cas où le mode de codage sélectionné initialement pour ce mobile serait différent de ce mode de codage commun sélectionné pour le mode TFO.

Dans ce qui suit, on appellera entité locale (notée A) l'entité initiatrice de ladite négociation, l'autre entité étant dite entité distante (notée B).

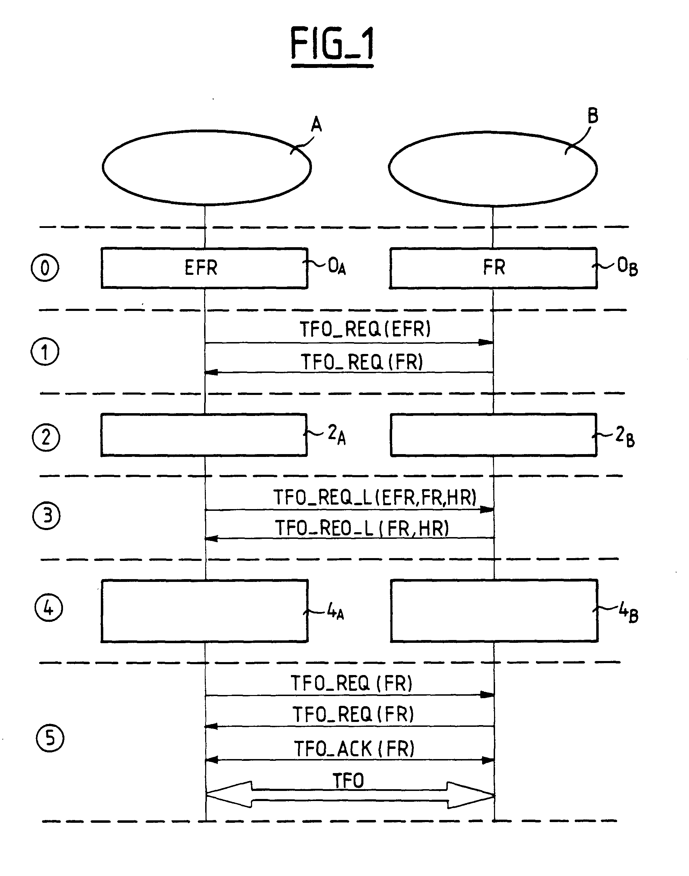

La figure 1 est destinée à illustrer sur un exemple les différentes étapes rappelées ci-dessus. On considère à titre d'exemple le cas où le mode de codage initialement sélectionné pour le mobile géré par l'entité locale A est le mode EFR, et où le mode de codage initialement sélectionné pour le mobile géré par l'entité distante B est le mode FR, cette sélection initiale de mode de codage correspondant à une étape initiale notée 0 (0_{A}, 0_{B}). On considère en outre à titre d'exemple le cas où l'ensemble des modes de codage EFR, FR et HR est supporté pour le mobile géré par l'entité locale A, et où l'ensemble des modes de codage FR et HR est supporté pour le mobile géré par l'entité distante B.

Sur la figure 1, une telle négociation comporte ainsi:
- une première étape de signalisation notée 1 au cours de laquelle l'entité locale A transmet un message noté TFO_REQ (EFR) à l'entité distante B, et l'entité distante B transmet un message noté TFO_REQ (FR) à l'entité locale A,
- une étape 2 (2_{A}, 2_{B}) au cours de laquelle chaque entité détecte que les modes de codage initialement sélectionnés indépendamment pour chacun desdits mobiles ne se correspondent pas,
- une deuxième étape de signalisation notée 3 au cours de laquelle l'entité locale A transmet un message noté TFO_REQ_L (EFR, FR, HR) à l'entité distante B, et l'entité distante B transmet un message noté TFO_REQ_L (FR, HR) à l'entité locale A,
- une étape 4 (4_{A}, 4_{B}) au cours de laquelle on détecte si un mode de codage est supporté de manière commune dans les listes de modes de codage supportés communiquées à l'étape 3. En l'occurrence, parmi les modes de codage supportés de manière commune, le mode de codage FR étant celui qui permet d'obtenir la meilleure qualité de parole, il constitue le mode de codage commun pour le mode TFO, et un changement de mode de codage est en l'occurrence effectué, à l'étape 4_{A}, du mode EFR vers le mode FR,
- une étape 5 au cours de laquelle l'entité locale A transmet un message noté TFO_REQ (FR) à l'entité distante B, l'entité distante B transmet un message noté TFO_REQ (FR) à l'entité locale A, les entités locale et distante se communiquent des messages TFO_ACK (FR), puis échangent des trames notées TFO (ou "TFO frames" en anglais).

Actuellement, et comme rappelé précédemment, le mode TFO n'est pas possible dans le cas de mode de codage constitué dans cet exemple par le mode AMR. Notamment, si le mode de codage sélectionné initialement pour un mobile géré par l'entité locale A est le mode AMR, aucune négociation en vue d'établir le mode TFO n'est initiée par l'entité locale A.

Or ceci ne permet pas d'optimiser la qualité de parole.

La présente invention a pour objet un procédé permettant notamment d'éviter cet inconvénient.

Suivant ce procédé, ledit mode de fonctionnement sans double transcodage n'étant pas possible dans le cas de mode de codage dit non autorisé pour ce mode de fonctionnement, au lieu d'utiliser dans ce cas le mode de fonctionnement avec double transcodage, on utilise, si possible, le mode de fonctionnement sans double transcodage et avec un mode de codage autorisé, à condition que ce mode de codage autorisé soit supporté.

Notamment, le mode de fonctionnement sans double transcodage étant établi à l'issue d'une négociation visant à sélectionner un mode de codage commun pour ce mode de fonctionnement, et une telle négociation étant (comme cela est le cas dans dans l'exemple de procédé rappelé en relation avec la figure 1) initiée sur la base de modes de codage sélectionnés initialement indépendamment pour chacun desdits mobiles, si le mode de codage sélectionné initialement pour au moins un desdits mobiles est un mode de codage non autorisé, une négociation est initiée en remplaçant, pour ce mobile, ce mode de codage non autorisé par un mode de codage autorisé, à condition que ce mode de codage autorisé soit supporté.

On considère dans ce qui suit, à titre d'exemple de mode de codage non autorisé, le mode AMR, et à titre d'exemple de modes de codage autorisés, les modes EFR, FR, et HR.

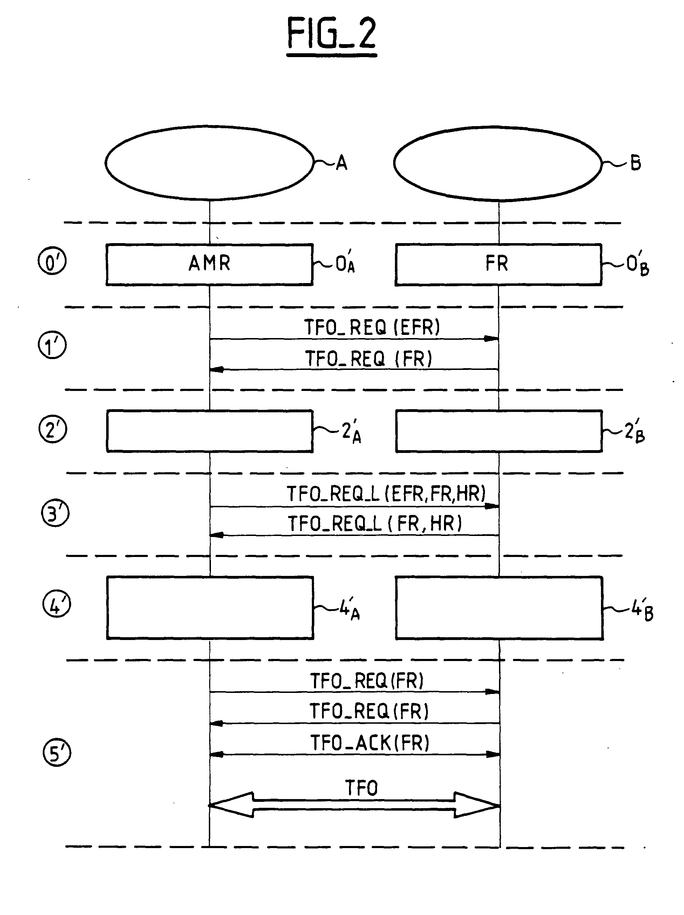

A titre d'exemple, sur les figures 2, 3 et 4, on considère le cas où le mode de codage initialement sélectionné pour le mobile géré par l'entité locale A est le mode AMR.

Suivant l'invention, et dans les exemples illustrés sur ces figures, une négociation est alors initiée en remplaçant, pour le mobile géré par l'entité locale A, le mode AMR par l'un des modes de codage supportés, par exemple, dans les exemples illustrés, le mode EFR.

La figure 2 correspond au cas où le mode de codage initialement sélectionné pour le mobile géré par l'entité distante B n'est ni le mode non autorisé AMR, ni le mode de codage autorisé choisi pour le remplacer.

A titre d'exemple, la figure 2 correspond au cas où le mode de codage initialement sélectionné pour le mobile géré par l'entité distante A est le mode FR, comme noté à l'étape initiale notée 0' (0'_{A}, 0'_{B}) sur cette figure. Egalement à titre d'exemple, la figure 2 correspond au cas où l'ensemble des modes de codage EFR, FR et HR est supporté pour le mobile géré par l'entité locale A, et au cas où l'ensemble des modes de codage FR et HR est supporté pour le mobile géré par l'entité distante B.

Sur la figure 2, ladite négociation comporte, dans cet exemple:
- une première étape de signalisation notée 1' au cours de laquelle l'entité locale A transmet un message noté TFO_REQ (EFR) à l'entité distante B, et l'entité distante B transmet un message noté TFO_REQ (FR) à l'entité locale A,
- une étape 2' (2'_{A}, 2'_{B}) au cours de laquelle chaque entité détecte que les modes de codage sur la base desquels ladite négociation a été initiée ne se correspondent pas,
- une deuxième étape de signalisation notée 3' au cours de laquelle l'entité locale A transmet un message noté TFO_REQ_L (EFR, FR, HR) à l'entité distante B, et l'entité distante B transmet un message noté TFO_REQ_L (FR, HR) à l'entité locale A,
- une étape 4' (4'_{A}, 4'_{B}) au cours de laquelle on détecte si un mode de codage est supporté de manière commune dans les listes de modes de codage supportés ainsi communiquées à l'étape 3' (le mode AMR étant supprimé au moins dans une de ces listes). En l'occurrence, parmi les modes de codage supportés de manière commune, le mode de codage FR étant celui qui permet d'obtenir la meilleure qualité de parole, il constitue le mode de codage commun pour le mode TFO, et un changement de mode de codage est en l'occurrence effectué, à l'étape 4'_{A}, du mode AMR vers le mode FR,
- une étape 5' au cours de laquelle l'entité locale transmet un message noté TFO_REQ (FR) à l'entité distante, l'entité distante transmet un message noté TFO_REQ (FR) à l'entité locale, les entités locale et distante se communiquent des messages TFO_ACK (FR), puis échangent des trames TFO.

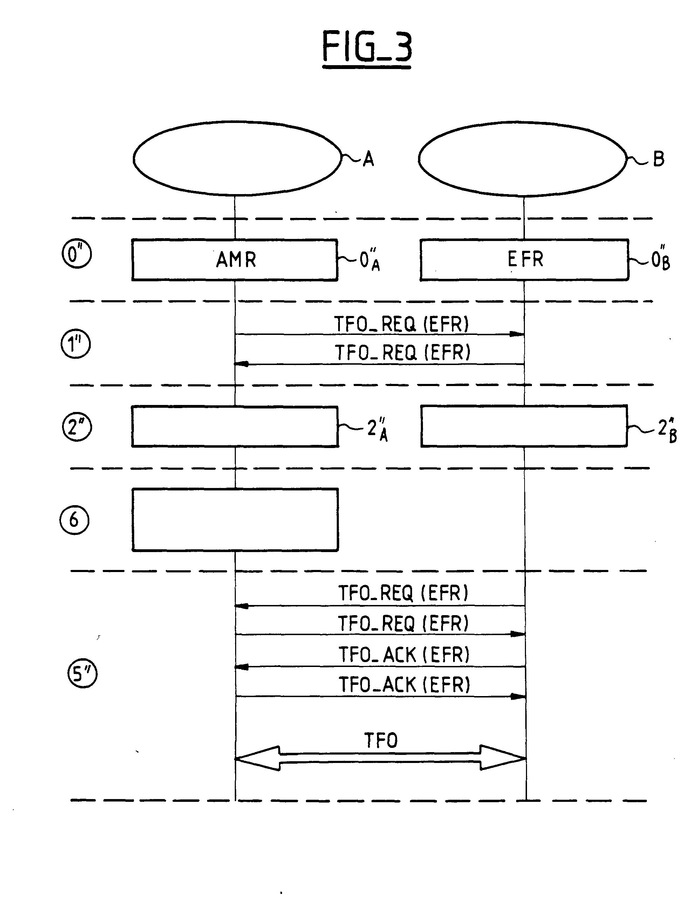

La figure 3 correspond au cas où le mode de codage initialement sélectionné pour le mobile géré par l'entité distante B est le mode de codage autorisé choisi pour le remplacer (en l'occurrence le mode EFR), comme indiqué à l'étape 0" (0"_{A}, 0"_{B}) sur cette figure.

Sur la figure 3, ladite négociation comporte, dans cet exemple:
- une première étape de signalisation notée 1" au cours de laquelle l'entité locale A transmet un message noté TFO_REQ (EFR) à l'entité distante B, et l'entité distante B transmet un message noté TFO_REQ (EFR) à l'entité locale A,
- une étape 2" (2"_{A}, 2"_{B}) au cours de laquelle, bien que les modes de codage sur la base desquels ladite négociation a été initiée se correspondent, on détecte dans l'entité locale A que les modes de codage initialement sélectionnés indépendamment pour chacun desdits mobiles ne se correspondent pas, alors que dans l'entité distante B on ne peut pas détecter que les modes de codage initialement sélectionnés indépendamment pour chacun desdits mobiles ne se correspondent pas,
- une étape 6 au cours de laquelle un changement de mode de codage est alors effectué, pour l'entité locale A, du mode AMR vers le mode EFR choisi pour le remplacer, de sorte que le mode de codage EFR peut maintenant constituer le mode de codage commun pour le mode TFO,
- une étape 5" au cours de laquelle l'entité locale A transmet un message noté TFO_REQ (EFR) à l'entité distante B, l'entité distante B transmet un message noté TFO_REQ (EFR) à l'entité locale A, les entités locale et distante se communiquent des messages TFO_ACK (EFR), puis échangent des trames TFO.

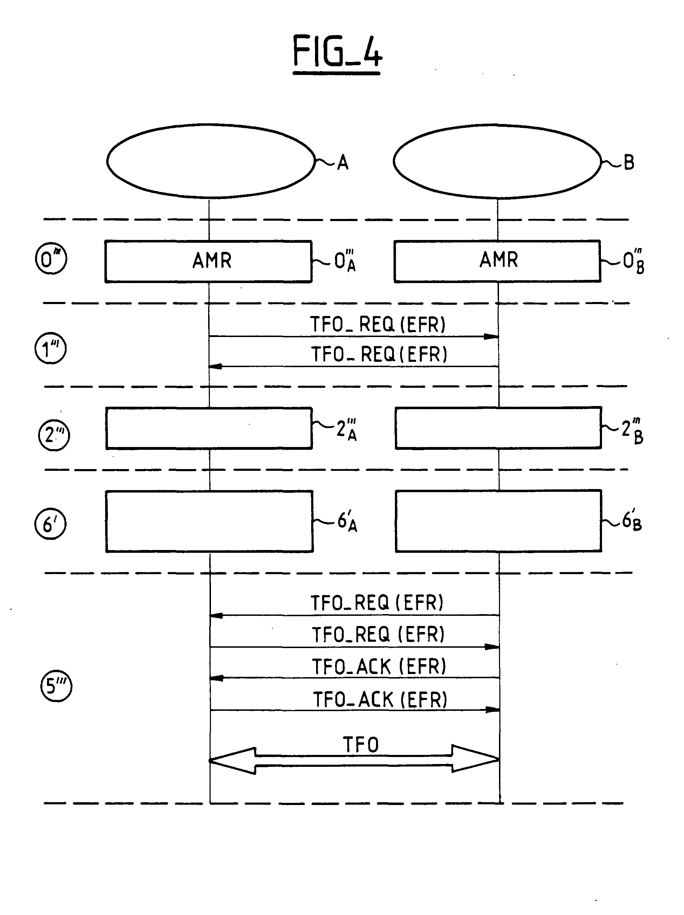

La figure 4 correspond au cas où le mode de codage initialement sélectionné pour le mobile géré par l'entité distante B est le mode non autorisé AMR, comme noté à l'étape 0"' (0"'_{A}, 0"'_{B}) sur cette figure.

A titre d'exemple, la figure 4 correspond au cas où le mode EFR, choisi pour remplacer le mode AMR, est supporté pour chacun des mobiles.

Sur la figure 4, ladite négociation comporte, dans cet exemple:
- une première étape de signalisation notée 1"' au cours de laquelle l'entité locale A transmet un message noté TFO_REQ (EFR) à l'entité distante B, et l'entité distante B transmet un message noté TFO_REQ (EFR) à l'entité locale A,
- une étape 2"' (2"'_{A}, 2"'_{B}) au cours de laquelle, bien que les modes de codage sur la base desquels ladite négociation a été initiée se correspondent, on détecte dans l'entité locale A et dans l'entité distante B que les modes de codage initialement sélectionnés indépendamment pour chacun desdits mobiles ne se correspondent pas,
- une étape 6' (6'_{A}, 6'_{B}) au cours de laquelle un changement de mode de codage est alors effectué, pour l'entité locale A et pour l'entité distante B, du mode AMR vers le mode EFR choisi pour le remplacer, de sorte que le mode de codage EFR peut maintenant constituer le mode de codage commun pour le mode TFO,
- une étape 5" au cours de laquelle l'entité locale A transmet un message noté TFO_REQ (EFR) à l'entité distante B, l'entité distante B transmet un message noté TFO_REQ (EFR) à l'entité locale A, les entités locale et distante se communiquent des messages TFO_ACK (EFR), puis échangent des trames TFO.

On notera que les figures ainsi décrites ne représentent que schématiquement de tels procédés, dans la mesure nécessaire à la compréhension de la présente invention, et sans entrer dans le détail des procédés ou protocoles de signalisation, qui peuvent par ailleurs faire appel à des principes classiques dans ces systèmes.

On notera en outre que ces figures ne correspondent qu'à des exemples de mises en oeuvre et/ou à des exemples de modes de codage, mais que ces exemples n'ont été donnés qu'à titre illustratif et non limitatif, d'autres exemples étant bien entendu possibles.

On notera en outre que ces figures correspondent à un système particulier, en l'occurrence le système GSM, mais que l'invention n'est pas limitée à un tel exemple et/ou à un tel système.

Notamment:
- les modes de codage AMR d'une part, et HR, FR et EFR d'autre part ne sont qu'un exemple possible de modes de codage non autorisés, respectivement autorisés, pour le mode TFO,
- bien que la description ci-dessus ne considère pas le cas où seul le mode de codage initialement sélectionné pour le mobile géré par l'entité distante est le mode AMR, la présente invention s'applique également à ce cas; dans ce cas, il suffit que le mode AMR soit supprimé dans au moins une des listes de mode de codage supportés, dans lesquelles est sélectionné le mode de codage commun pour le mode TFO.

La présente invention a également pour objet, outre un tel procédé, un système cellulaire de radiocommunications mobiles comportant des moyens de mise en oeuvre d'un tel procédé.

Dans l'exemple considéré, un tel système comporte des moyens pour réaliser les étapes décrites précédemment.

Plus généralement, un tel système comporte essentiellement, pour optimiser la qualité de parole, dans le cas de mode de codage dit non autorisé pour le mode de fonctionnement sans double transcodage, des moyens pour, au lieu d'utiliser dans ce cas un mode de fonctionnement avec double transcodage, utiliser si possible le mode de fonctionnement sans double transcodage et avec un mode de codage autorisé, à condition que ce mode de codage autorisé soit supporté.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour optimiser la qualité de parole dans un système de radiocommunications mobiles en utilisant si possible un mode de fonctionnement sans double transcodage pour un appel de mobile à mobile, ce procédé étant **caractérisé en ce que**, ledit mode de fonctionnement sans double transcodage n'étant pas possible dans le cas de mode de codage dit non autorisé pour ce mode de fonctionnement, au lieu d'utiliser dans ce cas un mode de fonctionnement avec double transcodage, on utilise si possible le mode de fonctionnement sans double transcodage et avec un mode de codage autorisé, à condition que ce mode de codage autorisé soit supporté.

2. Procédé selon la revendication 1, **caractérisé en ce que**, le mode de fonctionnement sans double transcodage étant établi à l'issue d'une négociation visant à sélectionner un mode de codage commun pour ce mode de fonctionnement, et une telle négociation étant initiée sur la base de modes de codage sélectionnés initialement indépendamment pour chacun desdits mobiles, si le mode de codage sélectionné initialement pour au moins un desdits mobiles est un mode de codage non autorisé, une négociation est initiée en remplaçant pour ce mobile ce mode de codage non autorisé par un mode de codage autorisé, à condition que ce mode de codage autorisé soit supporté.

3. Procédé selon l'une des revendications 1 et 2, **caractérisé en ce que**, si les modes de codage sur la base desquels ladite négociation est initiée se correspondent, ils constituent ledit mode de codage commun pour le mode de fonctionnement sans double transcodage.

4. Procédé selon l'une des revendications 1 et 2, **caractérisé en ce que**, si les modes de codage sur la base desquels ladite négociation est initiée ne se correspondent pas, un mode de codage commun pour le mode de fonctionnement sans double transcodage est sélectionné sur la base de listes de modes de codage supportés, pour chacun desdits mobiles, au moins une desdites listes ne comportant pas de mode de codage non autorisé.

5. Procédé selon l'une des revendications 1 à 4, **caractérisé en ce que** ledit système est un système de type GSM.

6. Procédé selon l'une des revendications 1 à 5, **caractérisé en ce qu'**un mode de codage non autorisé est un mode de codage adaptatif.

7. Procédé selon la revendication 6, **caractérisé en ce qu'**un mode de codage adaptatif est le mode AMR.

8. Procédé selon l'une des revendications 1 à 7, **caractérisé en ce qu'**un mode de codage autorisé est le mode plein débit.

9. Procédé selon l'une des revendications 1 à 8, **caractérisé en ce qu'**un mode de codage autorisé est le mode plein débit amélioré.

10. Procédé selon l'une des revendications 1 à 9, **caractérisé en ce qu'**un mode de codage autorisé est le mode demi- débit.

11. Système de radiocommunications mobiles, pour la mise en oeuvre d'un procédé selon l'une des revendications 1 à 10, système dans lequel un mode de fonctionnement sans double transcodage est utilisé si possible pour un appel de mobile à mobile, ce système étant **caractérisé en ce que**, ledit mode de fonctionnement sans double transcodage n'étant pas possible dans le cas de mode de codage dit non autorisé pour ce mode de fonctionnement, il comporte des moyens pour, au lieu d'utiliser dans ce cas un mode de fonctionnement avec double transcodage, utiliser si possible le mode de fonctionnement sans double transcodage et avec un mode de codage autorisé, à condition que ce mode de codage autorisé soit supporté.
